# EUROPEAN PATENT SPECIFICATION

(11) **EP 2 733 452 B1**
(45) Date of publication and mention of the grant of the patent: **17.10.2018**
(21) Application number: 12811706.6
(22) Date of filing: 11.07.2012
(51) Int. Cl.: F25B 39/00, F28D 1/053, F28F 1/12, F28F 1/32, F28F 19/00

(54) **OUTDOOR HEAT EXCHANGER, AND AIR CONDITIONING DEVICE FOR VEHICLE**
AUSSENWÄRMETAUSCHER UND KLIMATISIERUNGSVORRICHTUNG FÜR EIN FAHRZEUG
ÉCHANGEUR DE CHALEUR D'EXTÉRIEUR ET CLIMATISEUR DESTINÉ À UN VÉHICULE

(30) Priority: 14.07.2011 JP 2011155580
(43) Date of publication of application: 21.05.2014
(73) Proprietor: Panasonic Intellectual Property Management Co., Ltd., Osaka-shi, Osaka 540-6207 (JP)
(72) Inventor: MATSUMOTO, Subaru, Chuo-ku, Osaka-shi Osaka 540-6207 (JP); KOMORI, Kou, Chuo-ku, Osaka-shi Osaka 540-6207 (JP)
(74) Representative: Eisenführ Speiser
(86) International application number: PCT/JP2012/004492
(87) International publication number: WO 2013/008464

(56) References cited:
- EP-A2- 1 632 742
- JP-A- 6 221 787
- JP-A- 10 253 276
- JP-A- 11 294 984
- JP-A- H06 147 785
- JP-A- 2005 140 454
- JP-A- 2008 045 765
- JP-U- 57 019 792
- US-A- 5 289 874
- US-A1- 2007 199 686
- US-A1- 2009 173 478
- US-A1- 2010 083 694
- US-A1- 2011 036 550
- US-B1- 6 209 628

## Description

### TECHNICAL FIELD

The present invention relates to an outdoor heat exchanger used in heat pump type vehicle air conditioners and to a vehicle air conditioner using the outdoor heat exchanger.

### BACKGROUND ART

Conventionally, for example, in an automobile equipped with a gasoline engine, a heat pump is used for cooling, while engine waste heat is used for heating. In recent years, hybrid automobiles in which the amount of engine waste heat is small, and electric automobiles in which engine waste heat cannot be used, have become increasingly widespread. Accordingly, vehicle air conditioners using a heat pump not only for cooling but also for heating have been developed.

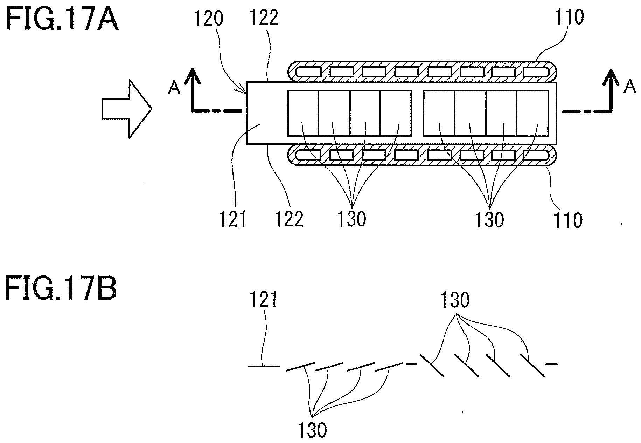

For example, Patent Literature 1 discloses an outdoor heat exchanger that is used in a heat pump-type vehicle air conditioner and that functions as an evaporator during the heating operation. In this outdoor heat exchanger, as shown in FIG. 17A and FIG. 17B, flat tubes 110 are arranged so as to face each other, and outdoor air is caused to flow between them in one direction. In addition, a corrugated fin 120 is disposed between the flat tubes 110.

The corrugated fin 120 includes a plurality of plate portions 121 arranged in a direction in which the flat tubes 110 extend, and a plurality of folded portions 122 joined to the flat tubes 110. Each plate portion 121 projects windward from the flat tubes 110. Each plate portion 121 has a plurality of louvers 130 formed by cutting and raising in a region lying between the flat tubes 110.

US 2007/0199686 A1 relates to a heat exchanger which includes flat tubes and corrugated fins. The corrugated fin includes portions contacting the adjacent tubes, and flat portions for making air to pass there between in an air flow direction. The flat portion has a first area including pairs of end louvers provided in end portions of the flat portion in a width direction between the end louvers in the width direction. The pairs of the end louvers are arranged in the flat portion in the air flow direction. The first area is provided with an upstream and a downstream end portion of the flat portion in the air flow direction.

US 2011/0036550 A1 discloses a fin with straight segments and substantially circular arc segments connected with the straight segments in turn along a longitudinal direction such that the arc segments from respective wave crests and wave troughs of the fin.

Finally, EP 1632742 discloses a heat exchanger for an air conditioning system for a motor vehicle, which includes one collection tube and a heat exchanger block with corrugated ribs and flat pipes with twisted ends to fit into the collection tube and straight sections with narrow sides. The corrugated ribs between the flat pipes are flush with the pipe narrow sides on one side, and extend over the pipe at the other side to form a rib projection.

### CITATION LIST

### Patent Literature

Patent Literature 1: JP 6-221787 A

### SUMMARY OF INVENTION

### Technical Problem

During the heating operation, frost is likely to be deposited on the windward end of the plate portion 121. When the plate portion 121 projects windward from the flat tubes 110 as shown in FIG. 17A, the deposition of frost on the windward end can be reduced.

In the outdoor heat exchanger of Patent Literature 1, however, heat actively transfers from the windward end of the plate portion 121 to the flat tubes 110. Therefore, there remains a possibility that frost is deposited concentratedly on the windward end of the plate portion 121.

In view of such circumstances, the present invention aims to reduce the deposition of frost during the heating operation in an outdoor heat exchanger used in heat pump-type vehicle air conditioners. The present invention also aims to provide a vehicle air conditioner using the outdoor heat exchanger.

### Solution to Problem

The solution to the problem is given by a heat exchanger according to claim 1. That is, the present disclosure provides an outdoor heat exchanger that is used in a heat pump-type vehicle air conditioner switchable between cooling operation and heating operation and that exchanges heat between a refrigerant and outdoor air, the outdoor air heat exchanger including: flat tubes in which the refrigerant flows, the flat tubes having a cross-sectional shape extended in a first direction, the flat tubes being arranged in a second direction orthogonal to the first direction so as to face each other, wherein the outdoor air is caused to flow between the flat tubes from one side to the other in the first direction; and a corrugated fin disposed between the flat tubes adjacent to each other, the corrugated fin including: a plurality of plate portions arranged in a third direction orthogonal to the first direction and the second direction; and a plurality of folded portions joined alternately to the flat tubes adjacent to each other. Each of the plurality of plate portions has a plurality of louvers formed by cutting and raising, the plurality of louvers being inclined with respect to the first direction and being substantially continuous with each other in the first direction. Each of the plurality of plate portions has an extension portion projecting windward in the first direction from a joining region where the plurality of folded portions are joined to the flat tubes. A foremost louver that is located on the most windward side among the plurality of louvers is disposed entirely within the extension portion. Each of the plurality of plate portions has a front flat portion as a part of the extension portion, the front flat portion being located windward of the foremost louver. The front flat portion has an area larger than half of that of the extension portion, and the entire foremost louver is disposed leeward of a center of the extension portion in the first direction.

In addition, the present disclosure provides a vehicle air conditioner including: a refrigeration circuit including a compressor that compresses a refrigerant, an indoor heat exchanger that exchanges heat between the refrigerant and air to be fed into a vehicle interior, an expansion mechanism that expands the refrigerant, and the above outdoor heat exchanger; and a switching means that switches a flow direction of the refrigerant flowing in the refrigeration circuit upon switching between heating operation and cooling operation.

### Advantageous Effects of Invention

According to the above configuration, a louver is disposed entirely within the extension portion of the plate portion that projects from the joining region. Therefore, heat transfer from the windward end of the plate portion to the joining region can be adequately reduced. Furthermore, since the front flat portion is formed to be longer than the foremost louver, heat exchange in the front flat portion can be restricted. Therefore, deposition of frost on the windward end of the plate portion can be reduced during the heating operation.

### BRIEF DESCRIPTION OF DRAWINGS

FIG. 1 is a schematic cross-sectional front view of an outdoor heat exchanger according to an embodiment of the present invention.
FIG. 2 is a configuration diagram of a vehicle air conditioner using the outdoor heat exchanger shown in FIG. 1.
FIG. 3A is an enlarged cross-sectional plan view showing a principal part of the outdoor heat exchanger shown in FIG. 1.
FIG. 3B is a cross-sectional side view taken along the IIIB-IIIB line of FIG. 3A.
FIG. 4 is an enlarged front view of a principal part of the outdoor heat exchanger shown in FIG. 1.
FIG. 5 shows graphs of the results of simulations under a dry condition, the graphs representing the air velocity-dependent relationships between the outdoor air pressure loss and the amount of heat exchanged per unit air path cross-sectional area for the models 1, 3, and 5.
FIG. 6 shows graphs of the results of simulations under the dry condition, the graphs representing the relationships between the air velocity and the ratio of the outdoor air pressure loss in each of the models 1, 2, 4, and 5 to the outdoor air pressure loss in the model 3.
FIG. 7A shows graphs of the results of simulations under a frost formation condition, the graphs representing changes over time in the ratio of the air path blocked by frost formation for the models 1, 4, and 5.
FIG. 7B shows graphs of the results of simulations under the frost formation condition, the graphs representing changes over time in the outdoor air pressure loss for the models 1, 4, and 5.
FIG. 8 shows graphs representing changes over time in the remaining water ratio after defrosting for the models 3 and 5.
FIG. 9A shows graphs of the results of simulations under the dry condition, the graphs representing the relationships between the inclination angle of louvers and the ratio of the outdoor air pressure loss in each of the models 7 to 10 to the outdoor air pressure loss in the model 6.
FIG. 9B shows graphs of the results of simulations under the dry condition, the graphs representing the relationships between the inclination angle of the louvers and the ratio of the amount of heat exchanged per unit air path cross-sectional area in each of the models 7 to 10 to the amount of heat exchanged per unit air path cross-sectional area in the model 6.
FIG. 10A shows graphs of the results of simulations under the frost formation condition, the graphs representing changes over time in the ratio of the air path blocked by frost formation for the models 6 to 10.
FIG. 10B shows graphs of the results of simulations under the frost formation condition, the graphs representing changes over time in the outdoor air pressure loss for the models 6 to 10.
FIG. 11 shows graphs of the results of simulations under the dry condition, the graphs representing: the relationship between the length of an extension portion and the ratio of the amount of heat exchanged per unit air path cross-sectional area in each of the models 12 to 15 to the amount of heat exchanged per unit air path cross-sectional area in the model 11; and the relationship between the length of the extension portion and the ratio of the outdoor air pressure loss in each of the models 12 to 15 to the outdoor air pressure loss in the model 11.
FIG. 12A shows graphs of the results of simulations under the frost formation condition, the graphs representing changes over time in the ratio of the air path blocked by frost formation for the models 11, 13, and 15.
FIG. 12B shows graphs of the results of simulations under the frost formation condition, the graphs representing changes over time in the outdoor air pressure loss for the models 11, 13, and 15.
FIG. 13 is a diagram showing a production process of a corrugated fin.
FIG. 14 is a diagram showing another pattern of the louvers.
FIG. 15 is a configuration diagram of a vehicle air conditioner according to a modification.
FIG. 16 is a configuration diagram of a vehicle air conditioner according to another modification.
FIG. 17A is an enlarged cross-sectional plan view of a principal part of a conventional outdoor heat exchanger used in vehicle air conditioners.
FIG. 17B is a cross-sectional side view taken along the A-A line of FIG. 17A.

### DESCRIPTION OF EMBODIMENTS

A first aspect of the present disclosure provides an outdoor heat exchanger that is used in a heat pump-type vehicle air conditioner switchable between cooling operation and heating operation and that exchanges heat between a refrigerant and outdoor air, the outdoor air heat exchanger including: flat tubes in which the refrigerant flows, the flat tubes having a cross-sectional shape extended in a first direction, the flat tubes being arranged in a second direction orthogonal to the first direction so as to face each other, wherein the outdoor air is caused to flow between the flat tubes from one side to the other in the first direction; and a corrugated fin disposed between the flat tubes adjacent to each other, the corrugated fin including: a plurality of plate portions arranged in a third direction orthogonal to the first direction and the second direction; and a plurality of folded portions joined alternately to the flat tubes adjacent to each other. Each of the plurality of plate portions has a plurality of louvers formed by cutting and raising, the plurality of louvers being inclined with respect to the first direction and being substantially continuous with each other in the first direction. Each of the plurality of plate portions has an extension portion projecting windward in the first direction from a joining region where the plurality of folded portions are joined to the flat tubes. A foremost louver that is located on the most windward side among the plurality of louvers is disposed entirely within the extension portion. Each of the plurality of plate portions has a front flat portion as a part of the extension portion, the front flat portion being located windward of the foremost louver. The front flat portion has an area larger than half of that of the extension portion.

A second aspect provides the outdoor heat exchanger as set forth in the first aspect, wherein the foremost louver is continuous with the front flat portion so as to form a ridge line between the front flat portion and the foremost louver. According to such a structure, no opening is formed between the windward end of the foremost louver and the front flat portion. Therefore, there is no possibility that such an opening is blocked by frost formation.

A third aspect provides the outdoor heat exchanger as set forth in the first aspect, wherein the plurality of louvers are inclined at an angle of 15 degrees or more and 25 degrees or less. According to such a structure, it is possible to improve the heat exchange efficiency during the cooling operation while decreasing the outdoor air pressure loss which gives an indication of frost formation.

A fourth aspect provides the outdoor heat exchanger as set forth in the first aspect, wherein each of the plurality of folded portions is formed in a shape having a flat central portion so as to be in surface contact with the flat tube. According to such a structure, it is possible to reduce the retention of water inside the folded portion during defrosting.

A fifth aspect provides the outdoor heat exchanger as set forth in any one of the first to fourth aspects, wherein each of the plurality of plate portions has a rear flat portion located leeward of a rearmost louver that is located on the most leeward side among the plurality of louvers, and the rear flat portion has a length greater than that of the front flat portion in the first direction. According to such a structure, improvement in terms of the remaining water ratio can be achieved by virtue of the greater length of the rear flat portion.

A sixth aspect provides the outdoor heat exchanger as set forth in any one of the first to fifth aspects, wherein the plurality of louvers form a windward louver group constituted by parallel louvers including the foremost louver and a leeward louver group constituted by louvers inclined in an opposite direction to inclination of the foremost louver with respect to the first direction, and the windward louver group and the leeward louver group are axisymmetric when viewed in the second direction. According to such a structure, the windward louver group and the leeward louver group can be arranged in a balanced manner.

A seventh aspect provides the outdoor heat exchanger as set forth in any one of the first to sixth aspects, further including a pair of headers that extend in the second direction and to which both ends of the flat tubes are connected, wherein the first direction and the second direction are horizontal directions, and the third direction is a vertical direction. According to such a structure, the outdoor heat exchanger can have a simplified structure, and water discharge after defrosting is easy.

An eighth aspect provides the outdoor heat exchanger as set forth in the seventh aspect, wherein one or more partition plates are provided inside each of the pair of headers so as to divide the flat tubes into a plurality of tube groups between which a flow direction of the refrigerant is alternately reversed, and the corrugated fin is disposed at least between the flat tubes that constitute an evaporation-upstream tube group in which the refrigerant flows first in the heating operation among the plurality of tube groups. According to such a structure, the evaporation-upstream tube group has the lowest temperature in the heating operation. Therefore, the aforementioned effects can be obtained also when the corrugated fin having the feature described in the first aspect is disposed only between the flat tubes that constitute the evaporation-upstream tube group.

A ninth aspect forms part of the invention, wherein the entire foremost louver is disposed leeward of a center of the extension portion in the first direction. According to such a structure, an appropriate distance from the joining region to the windward end of the plate portion is ensured. Therefore, heat transfer from the windward end of the plate portion to the joining region can be adequately reduced.

A tenth aspect provides the outdoor heat exchanger as set forth in any one of the first to ninth aspects, wherein a part of the louver that is adjacent to the foremost louver is disposed at a position of a rear end of the extension portion in the first direction. According to such a structure, the entire foremost louver can be disposed within the extension portion with certainty.

An eleventh aspect provides the outdoor heat exchanger as set forth in any one of the first to tenth aspects, wherein the plurality of louvers have the same length in the second direction. According to such a structure, formation of the louvers is easy.

A twelfth aspect provides the outdoor heat exchanger as set forth in any one of the first to eleventh aspects, wherein the extension portion has a length of 1.5 mm or more and 3.5 mm or less in the first direction.

In the case of conventional configurations, frost is likely to be deposited on the windward end of the plate portion 121 during the heating operation. When the plate portion 121 projects windward from the flat tubes 110 as shown in FIG. 17A, the deposition of frost on the windward end can be reduced. However, when the plate portion 121 projects from the flat tubes 110, the heat exchange efficiency per unit volume in the whole outdoor heat exchanger during the cooling operation is lowered since the heat exchanger functions as a condenser during the cooling operation. From the standpoint of the heat exchange efficiency during the cooling operation, it is effective to decrease the extent of projection of the plate portion 121 from the flat tubes 110. However, with such a configuration, frost is more likely to be deposited on the windward end of the plate portion 121 during the heating operation. Thus, it is difficult to achieve both reduction in frost deposition during the heating operation and good heat exchange efficiency during the cooling operation.

In view of such circumstances, the twelfth aspect aims to make it possible to achieve both reduction in frost deposition during the heating operation and good heat exchange efficiency during the cooling operation in an outdoor heat exchanger used in heat pump-type vehicle air conditioners.

Patent Literature 1 states that the length of the projection of the plate portion from the flat tube is about 2 to 5 mm. However, both ends of the flat tube are rounded, and the rounded portions make no contribution to heat transfer from the flat tube to the corrugated fin. That is, the plate portion is required to project from a region where the folded portion and the flat tube are in contact, but does not necessarily have to project from the flat tube. The twelfth aspect has been made from such a standpoint.

According to the twelfth aspect, the extension portion of the plate portion that projects from the joining region has a reduced length. Therefore, good heat exchange efficiency can be obtained during the cooling operation. In addition, since a louver is disposed within the extension portion, the amount of heat transferred from the joining region to the windward end of the plate portion can be decreased, and deposition of frost on the windward end can be reduced during the heating operation.

A thirteenth aspect provides a vehicle air conditioner including: a refrigeration circuit including a compressor that compresses a refrigerant, an indoor heat exchanger that exchanges heat between the refrigerant and air to be fed into a vehicle interior, an expansion mechanism that expands the refrigerant, and the outdoor heat exchanger according to any one of the first to twelfth aspects; and a switching means that switches a flow direction of the refrigerant flowing in the refrigeration circuit upon switching between heating operation and cooling operation.

Hereinafter, embodiments of the present invention will be described with reference to the drawings. The following description relates to illustrative examples of the present invention, and the present invention is not limited by these examples.

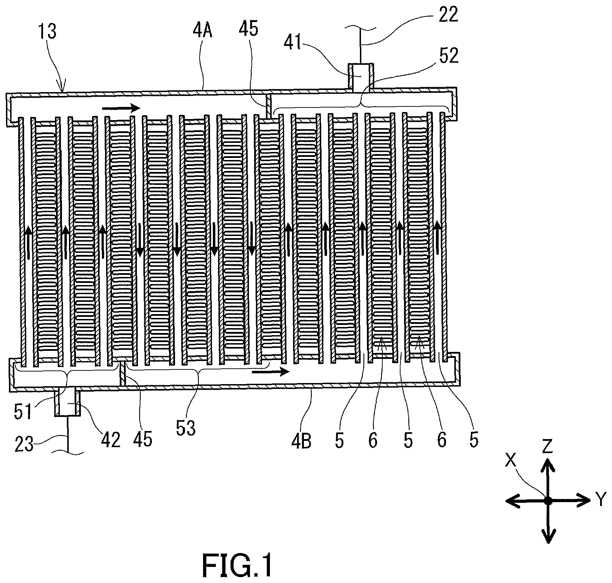

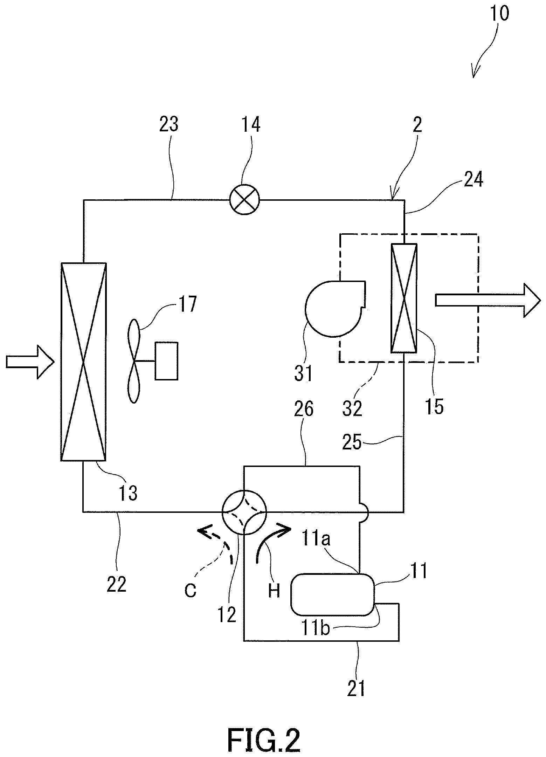

An outdoor heat exchanger 13 according to an embodiment of the present invention is shown in FIG. 1. The outdoor heat exchanger 13 is used in a heat pump-type vehicle air conditioner 10 as shown in FIG. 2. Therefore, the vehicle air conditioner 10 will be described first with reference to FIG. 2, and then the outdoor heat exchanger 13 will be described in detail.

### <Vehicle air conditioner>

The vehicle air conditioner 10 is switchable between cooling operation and heating operation, and includes a refrigeration circuit 2 in which a refrigerant is circulated. As the refrigerant, R134a, R410A, HFO-1234yf, HFO-1234ze, CO₂, or the like can be used. In addition, other HFC refrigerants, other HC refrigerants, and the like, can also be used.

The refrigeration circuit 2 includes a compressor 11, a four-way valve 12, the outdoor heat exchanger 13, an expansion valve 14, and an indoor heat exchanger 15. These devices 11 to 15 are connected by first to sixth flow paths 21 to 26. Specifically, a suction port 11a of the compressor 11 and a discharge port 11b of the compressor 11 are respectively connected to two ports of the four-way valve 12 via the sixth flow path 26 and the first flow path 21. The other two ports of the four-way valve 12 are respectively connected to the outdoor heat exchanger 13 and the indoor heat exchanger 15 via the second flow path 22 and the fifth flow path 25. The outdoor heat exchanger 13 and the indoor heat exchanger 15 are connected to the expansion valve 14 via the third flow path 23 and the fourth flow path 24, respectively. An accumulator may be provided on the sixth flow path 26.

The four-way valve 12 corresponds to the switching means of the present invention. In the cooling operation, the four-way valve 12 switches the flow direction of the refrigerant flowing in the refrigeration circuit 2 to a first direction indicated by a dashed arrow C, while in the heating operation, the four-way valve 12 switches the flow direction to a second direction indicated by a solid arrow H. The first direction is a direction in which the refrigerant discharged from the compressor 11 passes through the outdoor heat exchanger 13, the expansion valve 14, and the indoor heat exchanger 15 in this order to return to the compressor 11. The second direction is a direction in which the refrigerant discharged from the compressor 11 passes through the indoor heat exchanger 15, the expansion valve 14, and the outdoor heat exchanger 13 in this order to return to the compressor 11.

The compressor 11 is driven by an electric motor which is not shown, compresses the refrigerant drawn through the suction port 11a, and discharges the refrigerant through the discharge port 11b. The electric motor may be disposed inside the compressor 11 or may be disposed outside the compressor 11.

The outdoor heat exchanger 13 is disposed, for example, in a front portion of an automobile, and exchanges heat between the refrigerant and outdoor air supplied by travel of the vehicle and by a fan 17. The outdoor heat exchanger 13 functions as a condenser during the cooling operation, and functions as an evaporator during the heating operation.

The expansion valve 14 is an example of the expansion mechanism that expands the refrigerant. For example, a positive-displacement expander that recovers power from the refrigerant being expanded can be employed as the expansion mechanism.

The indoor heat exchanger 15 is disposed in a duct 32, and exchanges heat between the refrigerant and air to be fed into the vehicle interior by a blower 31. The air taken into the duct 32 by the blower 31 may be either outdoor air or indoor air or may include both outdoor air and indoor air. The indoor heat exchanger 15 functions as an evaporator during the cooling operation, and functions as a condenser during the heating operation.

### <Outdoor heat exchanger>

As shown in FIG. 1, the outdoor heat exchanger 13 includes: a plurality of flat tubes 5 in which the refrigerant flows; and a pair of headers 4A and 4B to which both ends of the flat tubes 5 are connected. The flat tubes 5 have a cross-sectional shape extended in a first direction (direction orthogonal to the sheet of paper), and are arranged in a second direction orthogonal to the first direction so as to face each other. The pair of headers 4A and 4B extend in the second direction. Hereinafter, for convenience of description, the first direction is referred to as an X direction, the second direction is referred to as a Y direction, and a third direction orthogonal to the first direction and the second direction is referred to as a Z direction.

In the present embodiment, the X direction and the Y direction are horizontal directions, and the Z direction is a vertical direction. In other words, the pair of headers 4A and 4B extend in the horizontal direction, and the flat tubes 5 disposed between the headers extend in the vertical direction. The flat tubes 5 do not necessarily have to extend in the vertical direction, and may extend in an oblique direction or the horizontal direction. The pair of headers 4A and 4B do not necessarily have to extend in the horizontal direction, and my extend in the vertical direction.

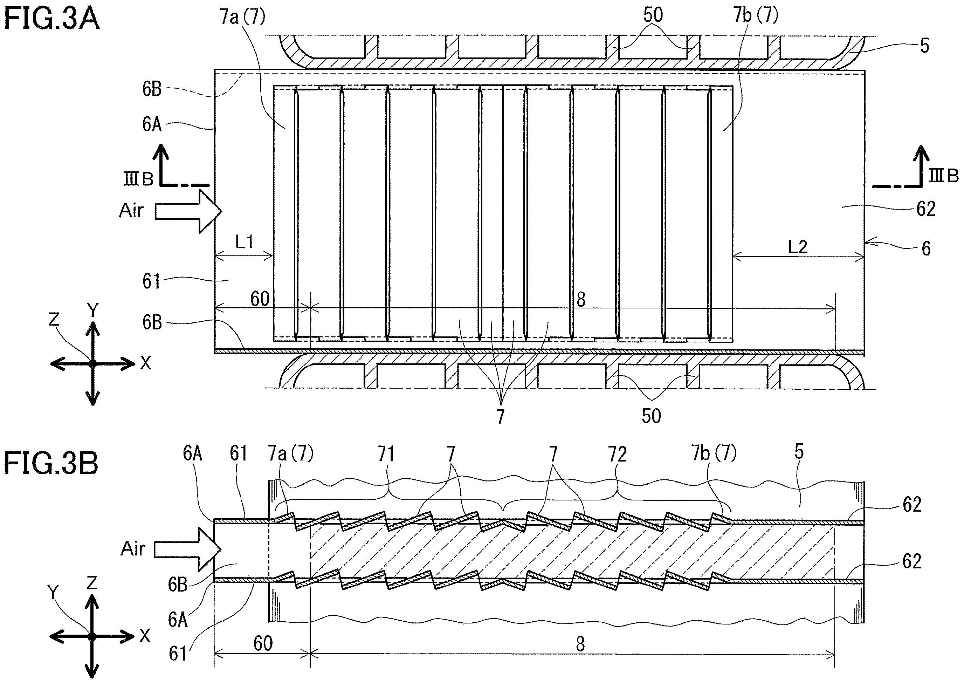

Outdoor air is caused to flow between the flat tubes 5 from one side to the other in the X direction. In addition, a plurality of partition walls 50 (see FIG. 3A) are disposed inside each flat tube 5, so that the flow path in which the refrigerant flows is divided in the X direction.

A corrugated fin 6 is disposed between the flat tubes 5 adjacent to each other. In the present embodiment, corrugated fins 6 of the same shape are disposed between all of the flat tubes 5. The corrugated fin 6 may be disposed between the outermost flat tube 5 and a side wall (not shown) facing the outermost flat tube 5.

The pair of headers 4A and 4B are provided with a first flow port 41 to which the second flow path 22 is connected and a second flow port 42 to which the third flow path 23 is connected. That is, during the cooling operation in which the outdoor heat exchanger 13 functions as a condenser, the first flow port 41 serves as an inflow port, and the second flow port 42 serves as an outflow port. During the heating operation in which the outdoor heat exchanger 13 functions as an evaporator, the second flow port 42 serves as an inflow port, and the first flow port 41 serves as an outflow port. In the present embodiment, the first flow port 41 is provided in the header 4A located on the upper side, and the second flow port 42 is provided in the header 4B located on the lower side.

One or more partition plates 45 are provided inside each of the pair of headers 4A and 4B, and thus the flat tubes 5 are divided into a plurality of tube groups 51 to 53 between which the flow direction of the refrigerant is alternately reversed. In FIG. 1, the flow direction of the refrigerant is indicated by a solid arrow only for the heating operation.

The plurality of tube groups 51 to 53 includes the evaporation-upstream tube group 51 closest to the second flow port 42, the evaporation-downstream tube group 52 closest to the first flow port 41, and one or more intermediate tube groups 53 located between the tube groups 51 and 52. The number of the tube groups 51 to 53 is, for example, 3 or more and 6 or less.

In the present embodiment, the first flow port 41 and the second flow port 42 are provided in the different headers. One partition plate 45 is provided inside each of the pair of headers 4A and 4B, and the number of the tube groups 51 to 53 is three which is an odd number. However, the number of the tube groups 51 to 53 may be an even number, and the first flow port 41 and the second flow port 42 may be provided in the same header.

The number of the flat tubes 5 constituting each of the tube groups 51 to 53 preferably increases from the evaporation-upstream tube group 51 to the evaporation-downstream tube group 52 in a stepwise fashion. For example, in the case where the number of the tube groups 51 to 53 is three as in the present embodiment, the evaporation-upstream tube group 51 may be constituted by nineteen flat tubes 5, the intermediate tube group 53 may be constituted by twenty one flat tubes 5, and the evaporation-downstream group 51 may be constituted by twenty two flat tubes 5. FIG. 1 schematically represents the outdoor heat exchanger 13 by showing a small number of the flat tubes 5.

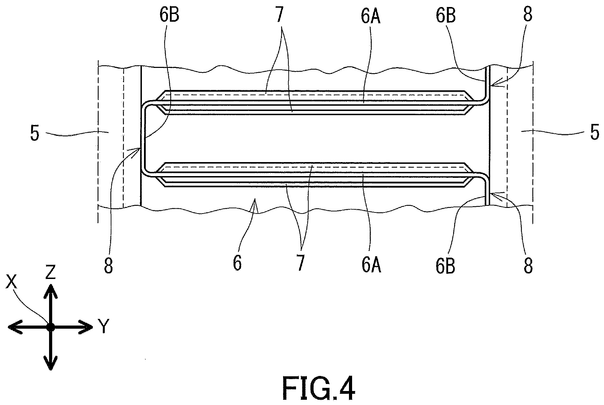

Next, the corrugated fin 6 will be described in detail with reference to FIG. 3A, FIG. 3B, and FIG. 4.

The corrugated fin 6 includes a plurality of plate portions 6A arranged in the Z direction and a plurality of folded portions 6B joined alternately to the flat tubes 5 adjacent to each other. The plate portions 6A are in the shape of a rectangle extending in the X direction, and the folded portions 6B connect together the end portions of the plate portions 6A in the width direction. That is, one wave is formed by one plate portion 6A, halves of two plate portions 6A located on both sides of the one plate portion 6A, and two folded portions 6B between the plate portions 6A.

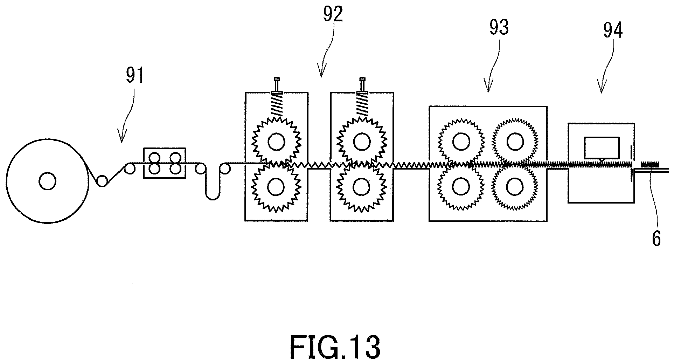

Such corrugated fins 6 are formed successively by a roller gear system. In the roller gear system, a material supplying device 91, a fin forming device 92, a fin pitch adjusting device 93, and a fin cutting device 94 are used in this order as shown in FIG. 13. The material supplying device 91 performs a step of feeding a fin material at a predetermined rate from a fin material roll while applying an oil to the fin material. The fin forming device 92 performs a step of forming the fin material into a corrugated shape and simultaneously forming a plurality of louvers 7 by using a pair of roll molds. The pair of roll molds have teeth for fin formation formed on their outer circumferences. Small teeth for forming the louvers 7 by cutting and raising, which are not shown, are formed on the side portions of the teeth for fin formation. The fin pitch adjusting device 93 performs a step of adjusting a fin pitch of the fin material formed in a corrugated shape to a predetermine pitch using another pair of roll molds having teeth for fin pitch adjustment formed on their outer circumferences. The fin cutting device 94 performs a step of successively forming a plurality of corrugated fins 6 by cutting the fin material formed in a corrugated shape into a predetermined length. Since the corrugated fins 6 are successively formed by the roller gear system, for example, slits or the like need not be subsequently formed by press working.

In the present embodiment, each folded portion 6B is formed in a shape having a flat central portion so as to be in surface contact with the flat tube 5. However, the folded portion 6B may be curved overall so as to be in line contact with the flat tube 5.

Each plate portion 6A has an extension portion 60 that projects windward in the X direction from a joining region 8 where the folded portions 6B are joined to the flat tubes 5. In the present embodiment, the plate portion 6A projects also leeward from the joining region 8, and the leeward end of the plate portion 6A is located at the same position as the leeward end of the flat tube 5 in the X direction.

The extension portion 60 preferably has a length of 1.5 mm or more and 3.5 mm or less so that the windward end of the plate portion 6A is as close to the joining region 8 as possible in the X direction.

In addition, each plate portion 6A has a plurality of louvers 7 formed by cutting and raising, the louvers 7 being inclined with respect to the X direction and being substantially continuous with each other in the X direction. Here, "substantially continuous" is a concept that includes not only a situation where all the louvers are completely continuous with each other but also a situation where a flat portion having a length which is twice or less the distance between cuts for raising lies between certain louvers. In the present embodiment, all the louvers 7 are completely continuous with each other.

The louvers 7 form a windward louver group 71 and a leeward louver group 72. The windward louver group 71 is constituted by parallel louvers 7 including a foremost louver 7a that is located on the most windward side among the louvers 7. The leeward louver group 72 is constituted by louvers 7 inclined in an opposite direction to the inclination of the foremost louver 7a with respect to the X direction, and includes a rearmost louver 7b that is located on the most leeward side among the louvers 7. In the present embodiment, the windward louver group 71 and the leeward louver group 72 are axisymmetric when viewed in the Y direction. In addition, the windward louver group 71 and the leeward louver group 72 have the same length in the Y direction.

The louvers 7 of the windward louver group 71 other than the louvers located at both ends of the windward louver group 71, and the louvers 7 of the leeward louver group 72 other than the louvers located at both ends of the leeward louver group 72, are each a two-protrusion louver protruding from the plate portion 6A on both sides in the Z direction. By contrast, the foremost louver 7a, the rearmost louver 7b, the louver 7 at the rear end of the windward louver group 71, and the louver 7 at the front end of the leeward louver group 72, are each a one-protrusion louver protruding from the plate portion 6A only on one side in the Z direction. The two-protrusion louver is formed by pushing a region between a pair of cuts in such a manner that the region is rotated about a center line of the region. Therefore, the length of the two-protrusion louver in the inclination direction is equal to the cut-to-cut distance. The one-protrusion louver is formed by pushing a region between a base line (line spaced from a cut by a distance that is half of the cut-to-cut distance) and a cut in such a manner that the region is rotated about the base line. Therefore, the length of the one-protrusion louver in the inclination direction is equal to half of the cut-to-cut distance. Since such a formation method is employed, both ends of each louver 7 in the Y direction are continuous with the plate portion 6A via Z-direction drawn portions.

When the inclination angle of the louvers 7 is too small, the pressure loss of outdoor air, which gives an indication of frost formation, can be indeed decreased, but the heat exchange efficiency during the cooling operation is deteriorated. On the other hand, when the inclination angle of the louvers 7 is too large, the heat exchange efficiency can be indeed improved during the cooling operation, but the pressure loss of outdoor air is increased. From such standpoints, the inclination angle of the louvers 7 is preferably 15 degrees or more and 25 degrees or less.

Furthermore, in the present embodiment, the foremost louver 7a is disposed within the extension portion 60 of the plate portion 6A. The entire foremost louver 7a is located leeward of the center of the extension portion 60 in the X direction. Specifically, in the X direction, the leeward end of the foremost louver 7a coincides with the end of the joining region 8 or is located windward of the end of the joining region 8, so that the entire foremost louver 7a lies within in the extension portion 60. The louver 7 that is adjacent to the foremost louver 7a is disposed in such a manner that the position corresponding to 1/3 of the louver 7 from its windward end coincides with the position of the rear end of the extension portion 60 in the X direction.

In addition, each plate portion 6A has a front flat portion 61 as a part of the extension portion 60, the front flat portion 61 being located windward of the foremost louver 7a. Also, the plate portion 6A has a rear flat portion 62 located leeward of the rearmost louver 7b. The front flat portion 61 has an area larger than half of that of the extension portion 60. That is, the front flat portion 61 is formed to have a greater length than the foremost louver 7a in the X direction. Specifically, the length of the front flat portion 61 in the X direction is about twice the length of the foremost louver 7a in the X direction. From the standpoint of workability in the cutting and raising, the front flat portion 61 and the rear flat portion 62 preferably have a length of 1mm or more. From the standpoint of water discharge performance during defrosting, a length L2 of the rear flat portion 62 is preferably greater than a length L1 of the front flat portion 61 in the X direction. More preferably, the length L2 of the rear flat portion 62 is 1.5 or more times the length L1 of the front flat portion 61. Even more preferably, the length L2 of the rear flat portion 62 is 2.0 or more times the length L1 of the front flat portion 61.

The foremost louver 7a is formed as a one-protrusion louver as mentioned above, and is thus continuous with the front flat portion 61 so as to form a ridge line between the front flat portion 61 and the foremost louver 7a. Similarly, the rearmost louver 7b is also continuous with the rear flat portion 62 so as to form a ridge line between the rear flat portion 62 and the rearmost louver 7b.

As described above, in the outdoor heat exchanger 13 of the present embodiment, the extension portion 60 of the plate portion 6A that projects from the joining region 8 has a reduced length. Therefore, good heat exchange efficiency can be obtained during the cooling operation. In addition, since the louver 7 is disposed entirely within the extension portion 60 of the plate portion 6A that projects from the joining region 8, heat transfer from the windward end of the plate portion 6A to the joining region 8 can be adequately reduced. Furthermore, since the front flat portion 61 is formed to be longer than the foremost louver 7a, heat exchange in the front flat portion 61 can be restricted. Therefore, deposition of frost on the windward end of the plate portion 6A can be reduced during the heating operation.

In addition, in the present embodiment, each folded portion 6B is formed in a shape having a flat central portion so as to be in surface contact with the flat tube 5. Therefore, it is possible to reduce the retention of water inside the folded portion 6B during defrosting.

### (Simulation)

Hereinafter, simulations performed to confirm the effect of the present embodiment will be described.

First, two conditions employing R134a as a refrigerant were set as analysis conditions. The first condition was a frost formation condition for evaluation of frost formation during the heating operation, and was that the temperature of the refrigerant was set to -5°C, the dry-bulb temperature of outdoor air was set to 2°C, and the wet-bulb temperature of outdoor air was set to 1°C. The second condition was set for evaluation of performance during the cooling operation, on the assumption of non-occurrence of frost formation in the heating operation. That is, the second condition was a dry condition set by excluding the setting of the wet-bulb temperature from the frost formation condition. The reason why the performance during the cooling operation can be evaluated using the dry condition is as described below.

The heat transfer coefficient for the refrigerant differs between the above dry condition and the cooling operation because of the difference depending on whether the refrigerant is evaporated or condensed. However, there is no difference in the heat transfer coefficient for outdoor air since the heat transfer coefficient for outdoor air depends on the fin shape and the air velocity. The heat transmission coefficient used for calculating the amount of heat exchanged in the outdoor heat exchanger is determined as an inverse number of the sum of the refrigerant-side thermal resistance derived from the heat transfer coefficient for the refrigerant and the air-side thermal resistance derived from the heat transfer coefficient for the outdoor air. However, since the refrigerant-side thermal resistance is very much smaller than the air-side thermal resistance, the heat transmission coefficient can be considered the same between the dry condition and the cooling operation. Therefore, the amount of heat exchanged during the cooling operation can be estimated from the amount of heat exchanged under the dry condition.

Similarly, although the absolute value of the outdoor air pressure loss in the outdoor heat exchanger varies by about several percent between the dry condition and the cooling operation because of the difference in density depending on the temperature of incoming outdoor air, the pressure loss during the cooling operation can be estimated by comparative observation of the pressure loss under the dry condition.

Next, five models 1 to 5 having a basic configuration as shown in FIG. 3A, FIG. 3B, and FIG. 4 were prepared. Among these models 1 to 5, only the length L1 of the front flat portion 61 and the length L2 of the rear flat portion 62 were varied, and the other dimensions were set to be the same. Specifically, L1/L2 was set in each model as shown below. That is, the plate portion 6A was symmetric in the X direction in the model 3, the louvers 7 were provided on the more leeward side in the models 1 and 2, and the louvers 7 were provided on the more windward side in the models 4 and 5.
Model 1: 4.3 mm/1.5 mm
Model 2: 3.3 mm/2.5 mm
Model 3: 2.9 mm/2.9 mm
Model 4: 2.3 mm/3.5 mm
Model 5: 1.8 mm/4.0 mm

Common dimensions were set as follows: the width (the long axis of the cross-sectional shape) of the flat tube 5 was 17.8 mm; the thickness (the short axis of the cross-sectional shape) of the flat tube 5 was 2.2 mm; the thickness of the corrugated fin 6 was 0.08 mm; the length of the corrugated fin 6 in the X direction was 19.8 mm; the width of the corrugated fin 6 in the Y direction was 8.9 mm; and the pitch between the plate portions 6A was 1.8 mm (i.e., the wavelength was 3.6 mm). Furthermore, the radius of the corner portion of the flat tube 5 was set to 0.9 mm, and the leeward end of the corrugated fin 6 was caused to coincide with the end of the flat tube 5 in the X direction. Therefore, the length of the extension portion 60 was 2.9 mm, and the length of the joining region 8 was 16.0 mm.

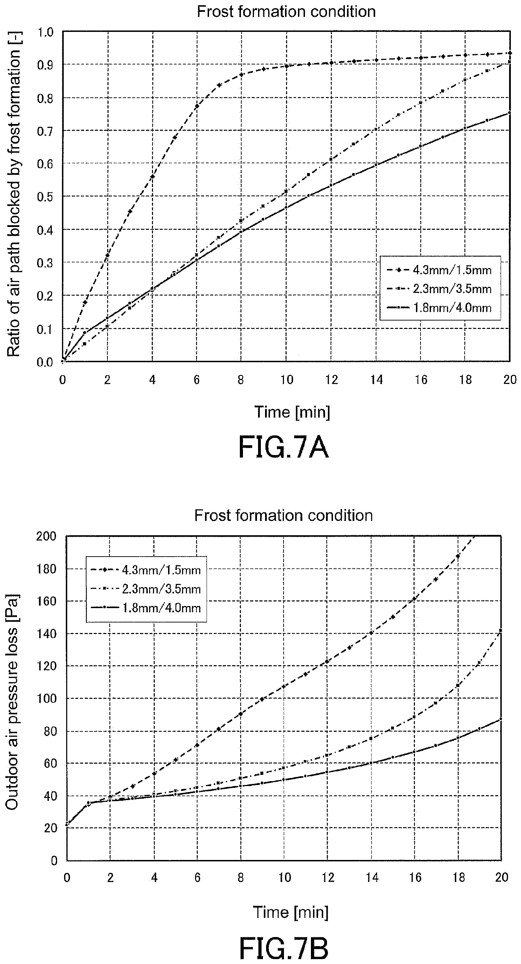

For the louvers 7, the cut-to-cut distance was set to 1.4 mm, the angle with respect to the X direction was set to 20 degrees. Thus, configurations as shown in FIG. 7B were obtained. That is, only the model 5 had a configuration in which the foremost louver 7a was disposed within the extension portion 60 (in the model 4, L1 + 0.7cos 20° was equal to 2.96, and the foremost louver 7a extended beyond the extension portion 60 by 0.06 mm).

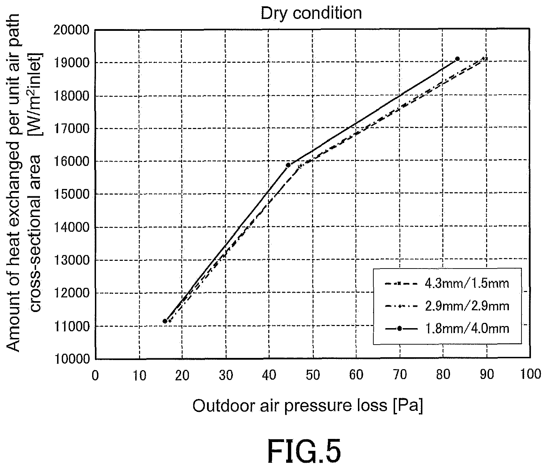

The velocity of outdoor air supplied to the outdoor heat exchanger was changed among 2.0 m/s, 4.0 m/s, and 6.0 m/s, and the amount of heat exchanged per unit air path cross-sectional area in the plate portion 6A and the outdoor air pressure loss were determined under the dry condition for each velocity. Among the results, those for the models 1, 3, and 5 are shown in FIG. 5. It can be understood from FIG. 5 that in the model 5, the outdoor air pressure loss during the cooling operation was reduced by about 5% compared to those in the models 1 and 3 while the amount of exchanged heat was similar to those in the models 1 and 3.

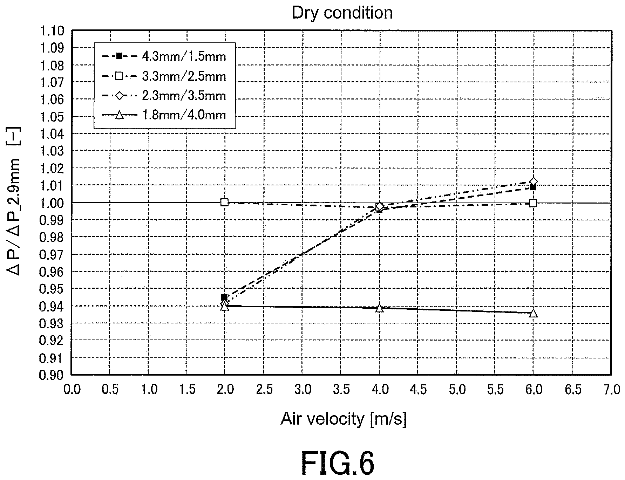

In order to provide verification from another standpoint, FIG. 6 shows how the outdoor air pressure loss in each of the models 1, 2, 4, and 5 varies depending on the air velocity, using as a reference the model 3 having a generally-employed conventional configuration in which the plate portion 6A is symmetric in the X direction.

It can be understood from FIG. 6 that irrespective of the air velocity, the model 5 showed significant improvement compared to the model 3 in terms of the outdoor air pressure loss during the cooling operation. On the other hand, the models 1 and 4 showed improvement compared to the model 3 in terms of the outdoor air pressure loss only when the air velocity was low, and the model 2 did not show a significant difference from the model 3.

Next, the models 1, 4, and 5 were analyzed as to how the air path blockage ratio and the outdoor air pressure loss change over time due to frost formation under the frost formation condition at an outdoor air velocity of 2.5 m/s. The results are shown in FIG. 7A and FIG. 7B. It can be understood from FIG. 7A and FIG. 7B that in the model 5, the ratio of the air path blocked by frost formation and the outdoor air pressure loss were minimized.

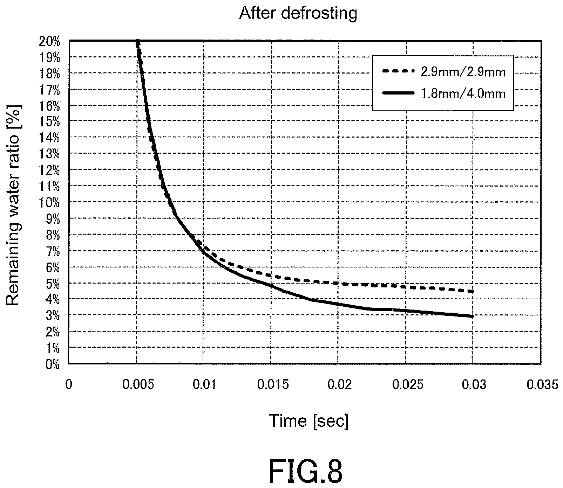

In addition, the models 3 and 5 were analyzed as to how the remaining water ratio changes over time in the case where defrosting of deposited frost is performed and then outdoor air is supplied to the outdoor heat exchanger at a velocity of 2.5 m/s. The results are shown in FIG. 8. It can be understood from FIG. 8 that the model 5 showed improvement compared to the model 3 in terms of the remaining water ratio. This is thought to be due to the greater length of the rear flat portion 62.

Furthermore, five models 6 to 10 were prepared by modifications of the model 5; specifically, the pitch between the plate portions 6A was changed to 1.5 mm, and the inclination angle of the louvers 7 was varied. Specific values of the inclination angle were as follows.
Model 6: 30 degrees
Model 7: 25 degrees
Model 8: 20 degrees
Model 9: 15 degrees
Model 10: 10 degrees

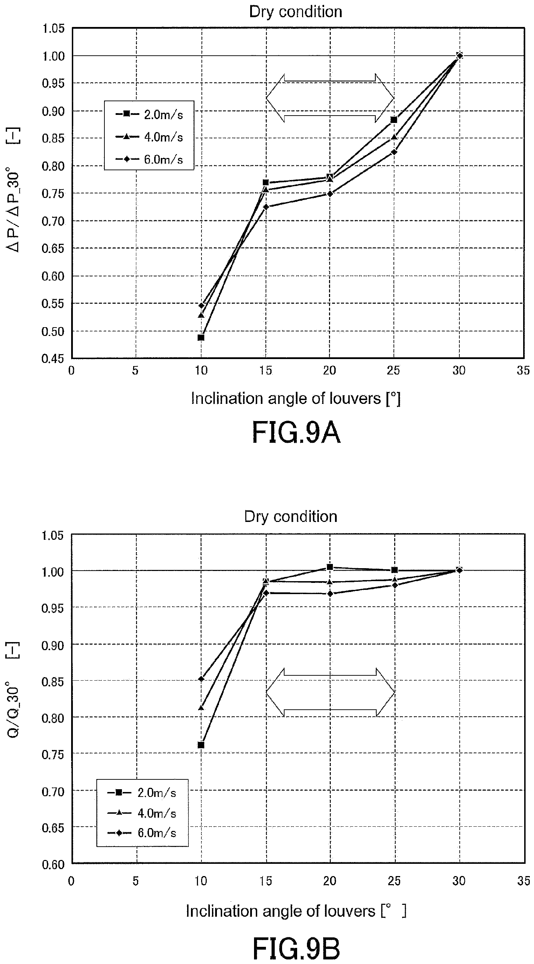

For the models 6 to 10, the velocity of outdoor air supplied to the outdoor heat exchanger was changed among 2.0 m/s, 4.0 m/s, and 6.0 m/s, and the outdoor air pressure loss and the amount of heat exchanged per unit air path cross-sectional area were determined under the dry condition for each velocity. FIG. 9A and FIG. 9B show how the outdoor air pressure loss and the amount of exchanged heat vary among the models 7 to 10 depending on the inclination angle, using as a reference the model 6 having a generally-employed conventional configuration in which the inclination angle of the louvers is 30 degrees. It can be understood from FIG. 9A and FIG. 9B that when the inclination angle of the louvers is 15 degrees to 25 degrees, improvement in terms of the outdoor air pressure loss can be achieved along with prevention of reduction in the amount of heat exchanged during the cooling operation.

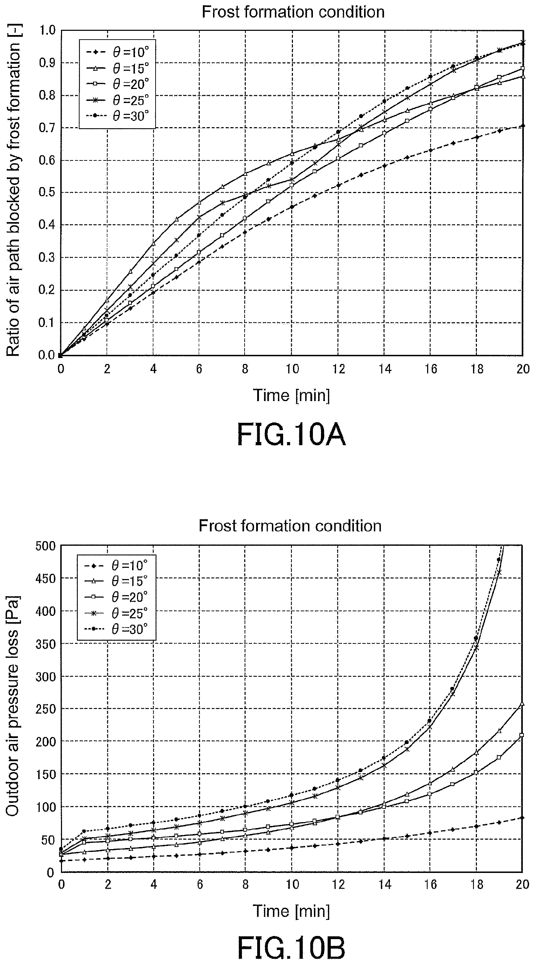

Next, the models 6 to 10 were analyzed as to how the air path blockage ratio and the outdoor air pressure loss change over time due to frost formation under the frost formation condition at an outdoor air velocity of 2.5 m/s. The results are shown in FIG. 10A and FIG. 10B. It can be understood from FIG. 9A, FIG. 9B, FIG. 10A, and FIG. 10B that when the inclination angle of the louvers is 15 degrees to 25 degrees, the influence of frost formation during the heating operation can be reduced, with the performance during the cooling operation being maintained at a high level.

Furthermore, five models 11 to 15 were prepared by modifications of the model 5; specifically, the pitch between the plate portions 6A was changed to 1.5 mm, and the length of the extension portion 60 was varied with the positions of the louvers 7 being fixed relative to the flat tube 5. In other words, the length L1 of the front flat portion 61 was varied among the five models 11 to 15. The length of the extension portion 60/the length L1 of the front flat portion 61 in each of the models 11 to 15 was as follows.
Model 11: 1.5 mm/0.4 mm
Model 12: 1.9 mm/0.8 mm
Model 13: 2.9 mm/1.8 mm(same as in the model 5)
Model 14: 3.5 mm/2.4 mm
Model 15: 4.9 mm/3.8 mm

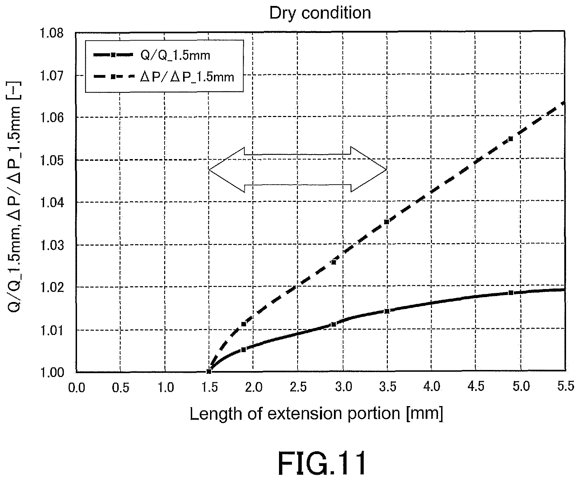

Next, for the models 11 to 15, the amount of heat exchanged per unit air path cross-sectional area and the outdoor air pressure loss were determined under the dry condition at an outdoor air velocity of 2.5 m/s. FIG. 11 shows how the amount of exchanged heat and the outdoor air pressure loss vary among the models 12 to 15 depending on the length of the extension portion 60, using as a reference the model 11 in which the length of the extension portion 60 is smallest (i.e., which is most difficult to fabricate).

It can be understood from FIG. 11 that the outdoor air pressure loss during the cooling operation linearly increases as the length of the extension portion 60 increases. The amount of heat exchanged per unit air path cross-sectional area linearly increases until the length of the extension portion 60 reaches 3.5 mm; however, the degree of increase is reduced when the length of the extension portion 60 is beyond 3.5 mm. This indicates that the heat exchange efficiency per unit volume in the whole outdoor heat exchanger gradually decreases as the length of the extension portion 60 increases above 3.5 mm, in view of the fact that an increase in the length of the extension portion 60 leads to an increase in the length of the corrugated fin 6 in the X direction, i.e., to an increase in the size of the outdoor heat exchanger. Therefore, the length of the extension portion 60 is preferably 3.5 mm or less.

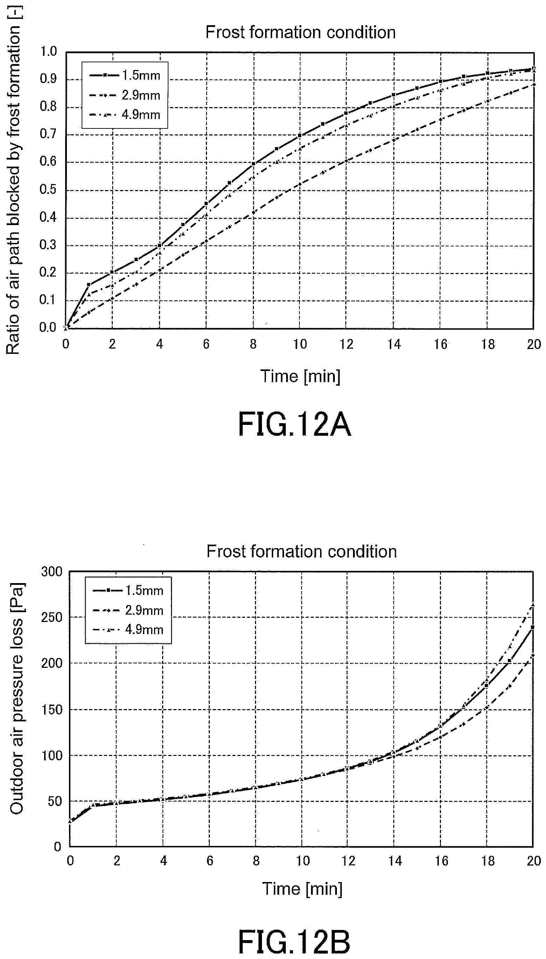

In addition, the models 11 to 15 were analyzed as to how the air path blockage ratio and the outdoor air pressure loss change over time due to frost formation under the frost formation condition at an outdoor air velocity of 2.5 m/s. The results are shown in FIG. 12A and FIG. 12B. It can be understood from FIG. 12A and FIG. 12B that an increase in the length of the extension portion 60 causes no significant change in the influence of frost formation.

### (Modification)

In the embodiment described above, the corrugated fins 6 having the foremost louver 7a disposed within the extension portion 60 are disposed between all of the flat tubes 5. However, since during the heating operation the evaporation-upstream tube group 51 in which the refrigerant flows first has the lowest temperature among the tube groups 51 to 53, it is sufficient that the corrugated fins 6 having the foremost louver 7a disposed within the extension portion 60 be disposed at least between the flat tubes 5 that constitute the evaporation-upstream tube group 51. For example, the corrugated fins 6 having the foremost louver 7a disposed within the extension portion 60 may be employed for only the evaporation-upstream tube group 51, and corrugated fins in which the foremost louver 7a is not disposed within the extension portion 60 may be employed for the other tube groups 52 and 53.

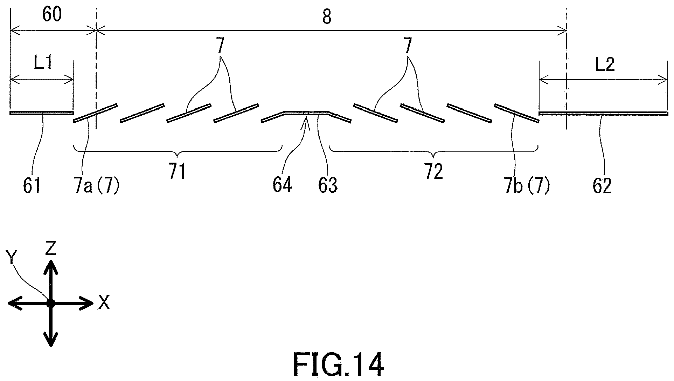

In addition, the foremost louver 7a does not necessarily have to be continuous with the front flat portion 61. For example, as shown in FIG. 14, the foremost louver 7a and the rearmost louver 7b may each be a two-protrusion louver that protrudes from the plate portion 6A on both sides in the Z direction. However, in this case, an opening is formed between the windward end of the foremost louver 7a and the front flat portion 61, which gives rise to the possibility of the opening being blocked by frost formation. From the standpoint of avoiding this possibility, the foremost louver 7a is preferably continuous with the front flat portion 61 as in the embodiment described above.

In addition, for example, a central flat portion 63 located in the same plane as the front flat portion 61 and the rear flat portion 62 and having a length that is twice or less the cut-to-cut distance may be provided between the windward louver group 71 and the leeward louver group 72, as shown in FIG. 14. In this case, there is a possibility that a large amount of frost is deposited on the louvers 7 in the vicinity of the central flat portion 63. Therefore, a slit 64 (of 0.1 mm width, for example) extending in the Y direction is preferably provided in the central flat portion 63.

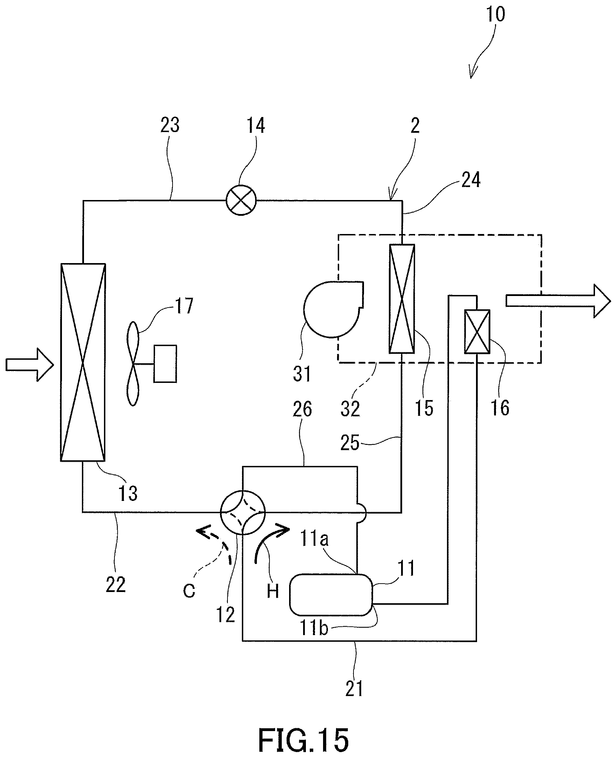

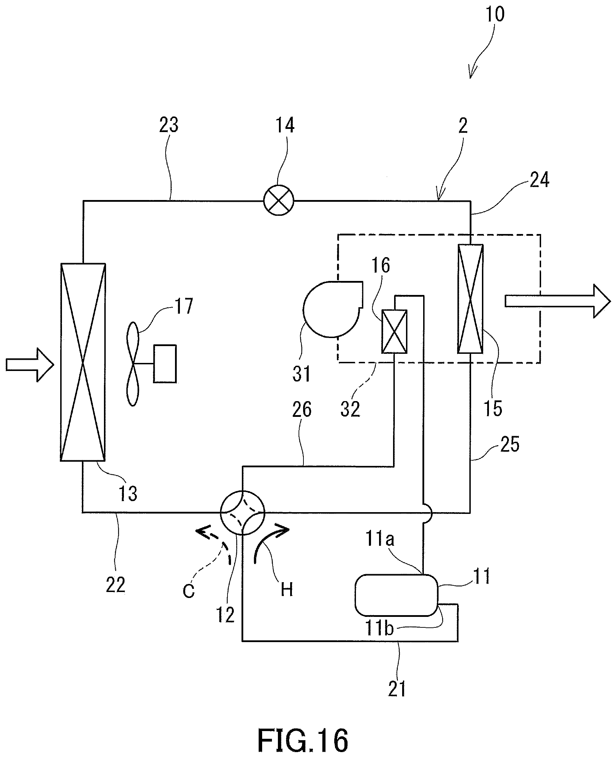

In addition, the configuration of the vehicle air conditioner 10 is not limited to that shown in FIG. 2. For example, the vehicle air conditioner 10 may have a configuration as shown in FIG. 15 or a configuration as shown in FIG. 16.

In the configuration shown in FIG. 15, an auxiliary indoor heat exchanger 16 that exchanges heat between the refrigerant and air to be fed into the vehicle interior by the blower 31 is provided on the first flow path 21. The auxiliary indoor heat exchanger 16 is disposed leeward of the indoor heat exchanger 15 in the duct 32. In addition, the auxiliary indoor heat exchanger 16 is disposed in such a manner that a first air path passing through the auxiliary indoor heat exchanger 16 and a second air path not passing through the auxiliary indoor heat exchanger 16 form separate layers in the duct 32. With such a configuration, air circulating in the vehicle interior can be further heated by the auxiliary indoor heat exchanger 16 after being heated by the indoor heat exchanger 15. Therefore, the effect of enhancing the heating performance can be obtained.

In the configuration shown in FIG. 16, the auxiliary indoor heat exchanger 16 that exchanges heat between the refrigerant and air to be fed into the vehicle interior by the blower 31 is provided on the sixth flow path 26. The auxiliary indoor heat exchanger 16 is disposed windward of the indoor heat exchanger 15 in the duct 32. In addition, the auxiliary indoor heat exchanger 16 is disposed in such a manner that a first air path passing through the auxiliary indoor heat exchanger 16 and a second air path not passing through the auxiliary indoor heat exchanger 16 form separate layers in the duct 32. With such a configuration, air circulating in the vehicle interior can be cooled by the two heat exchangers 15 and 16 during the cooling operation, and air circulating in the vehicle interior can be dehumidified by the auxiliary indoor heat exchanger 16 during the heating operation.

As the switching means that switches the flow direction of the refrigerant flowing in the refrigeration circuit 2, for example, a combination of two three-way valves, a so-called bridge circuit, or the like, can be used as well as the four-way valve 12.

## Claims

1. An outdoor heat exchanger (13) that is used in a heat pump-type vehicle air conditioner (10) switchable between cooling operation and heating operation and that exchanges heat between a refrigerant and outdoor air, the outdoor air heat exchanger comprising:
flat tubes (5) in which the refrigerant flows, the flat tubes (5) having a cross-sectional shape extended in a first direction, the flat tubes (5) being arranged in a second direction orthogonal to the first direction so as to face each other, wherein the outdoor air is caused to flow between the flat tubes (5) from one side to the other in the first direction; and
a corrugated fin (6) disposed between the flat tubes (5) adjacent to each other, the corrugated fin (6) comprising: a plurality of plate portions (6A) arranged in a third direction orthogonal to the first direction and the second direction; and a plurality of folded portions (6B) joined alternately to the flat tubes (5) adjacent to each other,
wherein
each of the plurality of plate portions (6A) has a plurality of louvers (7) formed by cutting and raising, the plurality of louvers (7) being inclined with respect to the first direction and being substantially continuous with each other in the first direction,
each of the plurality of plate portions (6A) has an extension portion (60) projecting windward in the first direction from a joining region where the plurality of folded portions are joined to the flat tubes,
a foremost louver (7a) that is located on the most windward side among the plurality of louvers (7) is disposed entirely within the extension portion (60),
each of the plurality of plate portions (6A) has a front flat portion (61) as a part of the extension portion, the front flat portion (61) being located windward of the foremost louver (7a),
**characterized in that**
the front flat portion (61) has an area larger than half of that of the extension portion (60), and
the entire foremost louver (7a) is disposed leeward of a center of the extension portion (60) in the first direction.

2. The outdoor heat exchanger (13) according to claim 1, wherein the foremost louver (7a) is continuous with the front flat portion (61) so as to form a ridge line between the front flat portion (61) and the foremost louver (7a), and is a one-protrusion louver that protrudes from the plate portion on only one side in the third direction.

3. The outdoor heat exchanger (13) according to claim 1, wherein the plurality of louvers (7) are inclined at an angle of 15 degrees or more and 25 degrees or less.

4. The outdoor heat exchanger (13) according to claim 1, wherein each of the plurality of folded portions is formed in a shape having a flat central portion so as to be in surface contact with the flat tube.

5. The outdoor heat exchanger (13) according to claim 1, wherein
each of the plurality of plate portions (6A) has a rear flat portion located leeward of a rearmost louver that is located on the most leeward side among the plurality of louvers, and
the rear flat portion has a length greater than that of the front flat portion (61) in the first direction.

6. The outdoor heat exchanger (13) according to claim 1, wherein
the plurality of louvers (7) form a windward louver group constituted by parallel louvers including the foremost louver (7a), and a leeward louver group constituted by louvers inclined in an opposite direction to inclination of the foremost louver (7a) with respect to the first direction, and
the windward louver group and the leeward louver group are axisymmetric when viewed in the second direction.

7. The outdoor heat exchanger (13) according to claim 1, further comprising a pair of headers that extend in the second direction and to which both ends of the flat tubes (5) are connected, wherein
the first direction and the second direction are horizontal directions, and the third direction is a vertical direction.

8. The outdoor heat exchanger (13) according to claim 7, wherein
one or more partition plates are provided inside each of the pair of headers so as to divide the flat tubes (5) into a plurality of tube groups between which a flow direction of the refrigerant is alternately reversed, and
the corrugated fin (6) is disposed at least between the flat tubes (5) that constitute an evaporation-upstream tube group in which the refrigerant flows first in the heating operation among the plurality of tube groups.

9. The outdoor heat exchanger (13) according to claim 1, wherein a part of the louver that is adjacent to the foremost louver (7a) is disposed at a position of a rear end of the extension portion (60) in the first direction.

10. The outdoor heat exchanger (13) according to claim 1, wherein the plurality of louvers (7) have the same length in the second direction.

11. The outdoor heat exchanger (13) according to claim 1, wherein the extension portion (60) has a length of 1.5 mm or more and 3.5 mm or less in the first direction.

12. A vehicle air conditioner (10) comprising:
a refrigeration circuit (2) comprising: a compressor (11) that compresses a refrigerant; an indoor heat exchanger (15) that exchanges heat between the refrigerant and air to be fed into a vehicle interior; an expansion mechanism (14) that expands the refrigerant; and the outdoor heat exchanger (13) according to claim 1; and
a switching means (12) that switches a flow direction of the refrigerant flowing in the refrigeration circuit upon switching between heating operation and cooling operation.

## Patentansprüche

1. Außenwärmetauscher (13), der in einer Wärmepumpen-Fahrzeugklimaanlage (10) verwendet wird, die zwischen Kühlbetrieb und Heizbetrieb umschaltbar ist und die Wärme zwischen einem Kältemittel und Außenluft austauscht, wobei der Außenluftwärmetauscher Folgendes umfasst:
Flachrohre (5), in denen das Kältemittel strömt, wobei die Flachrohre (5) eine Querschnittsform aufweisen, die sich in einer ersten Richtung ausdehnt, wobei die Flachrohre (5) in einer zweiten Richtung, orthogonal zu der ersten Richtung, angeordnet sind, um einander gegenüberzuliegend eingerichtet zu sein, wobei die Außenluft dazu gebracht wird, zwischen den Flachrohren (5) in der ersten Richtung von einer Seite zur anderen zu strömen; und
eine gewellte Rippe (6), die zwischen den einander benachbarten Flachrohren (5) angeordnet ist, wobei die gewellte Rippe (6) Folgendes umfasst: eine Mehrzahl von Plattenabschnitten (6 A), die in einer dritten Richtung orthogonal zu der ersten Richtung und zu der zweiten Richtung angeordnet sind; und eine Mehrzahl von gefalteten Abschnitten (6 B), die abwechselnd mit den Flachrohren (5) benachbart zueinander miteinander verbunden sind,
wobei
jeder der Mehrzahl von Plattenabschnitten (6 A) eine Mehrzahl von Luftschlitzen (7) aufweist, die durch Schneiden und Anheben gebildet sind, wobei die Mehrzahl von Luftschlitzen (7) in Bezug auf die erste Richtung einen geneigten Zustand aufweisen und in der ersten Richtung im Wesentlichen durchgehend eingerichtet sind,
jeder der Mehrzahl von Plattenabschnitten (6 A) einen Verlängerungsabschnitt (60) aufweist, der an einer windzugewandten Seite in die erste Richtung vorsteht, von einem Verbindungsbereich, an dem die Mehrzahl von gefalteten Abschnitten mit den Flachrohren verbunden ist,
ein vorderster Luftschlitz (7 a), der an der äußersten windzugewandten Seite der Mehrzahl von Luftschlitzen (7) angeordnet ist, vollständig innerhalb des Verlängerungsabschnitts (60) angeordnet ist,
jeder der Mehrzahl von Plattenabschnitten (6 A) einen vorderen flachen Abschnitt (61) als einen Teil des Verlängerungsabschnitts aufweist, wobei der vordere flache Abschnitt (61) an der windzugewandten Seite des vordersten Luftschlitzes (7 a) angeordnet ist,
**dadurch gekennzeichnet, dass**
der vordere flache Abschnitt (61) eine größere Fläche als die Hälfte von derjenigen des Verlängerungsabschnitts (60) aufweist, und
der gesamte vorderste Luftschlitz (7 a) von einer Mitte des Verlängerungsabschnitts (60) an einer windabgewandten Seite in der ersten Richtung angeordnet ist.

2. Außenwärmetauscher (13) nach Anspruch 1, wobei der vorderste Luftschlitz (7 a) fortlaufend mit dem vorderen flachen Abschnitt (61) gebildet ist, um eine Gratlinie zwischen dem vorderen flachen Abschnitt (61) und dem vordersten Luftschlitz (7 a) zu bilden, und einen Ein-Vorsprung-Luftschlitz darstellt, der von dem Plattenabschnitt nur auf einer Seite in der dritten Richtung vorsteht.

3. Außenwärmetauscher (13) nach Anspruch 1, wobei die Mehrzahl von Luftschlitzen (7) in einem Winkel von 15 Grad oder mehr und 25 Grad oder weniger geneigt sind.

4. Außenwärmetauscher (13) nach Anspruch 1, wobei jeder der Mehrzahl von gefalteten Abschnitten in einer Form ausgebildet ist, die einen flachen mittleren Abschnitt aufweist, um einen Oberflächenkontakt mit dem Flachrohr aufzuweisen.

5. Außenwärmetauscher (13) nach Anspruch 1, wobei
jeder der Mehrzahl von Plattenabschnitten (6 A) einen hinteren flachen Abschnitt aufweist, der sich an einer windabgewandten Seite eines hintersten Luftschlitzes befindet, welcher auf der äußersten windabgewandten Seite der Mehrzahl von Luftschlitzen angeordnet ist, und
der hintere flache Abschnitt eine Länge aufweist, die größer ist als die des vorderen flachen Abschnitts (61) in der ersten Richtung.

6. Außenwärmetauscher (13) nach Anspruch 1, wobei
die Mehrzahl von Luftschlitzen (7) eine windzugewandte Luftschlitzgruppe bilden, welche durch parallele Luftschlitze gebildet ist, die den vordersten Luftschlitz (7 a) einschließen, und eine windabgewandte Luftschlitzgruppe bilden, welche durch Luftschlitze gebildet ist, die in Bezug auf die erste Richtung in einer entgegengesetzten Richtung zur Neigung des vordersten Luftschlitzes (7 a) geneigt eingerichtet sind, und
die windzugewandte Luftschlitzgruppe und die windabgewandte Luftschlitzgruppe, in der zweiten Richtung gesehen, achsensymmetrisch angeordnet sind.

7. Außenwärmetauscher (13) nach Anspruch 1, ferner umfassend ein Paar von Sammelrohren, die sich in der zweiten Richtung erstrecken und mit denen beide Enden der Flachrohre (5) verbunden sind, wobei
die erste Richtung und die zweite Richtung horizontale Richtungen sind und die dritte Richtung eine vertikale Richtung ist.

8. Außenwärmetauscher (13) nach Anspruch 7, wobei
eine oder mehrere Trennplatten innerhalb von jedem der Paare von Sammelrohren vorgesehen sind, um die Flachrohre (5) in eine Mehrzahl von Rohrgruppen zu unterteilen, zwischen denen eine Strömungsrichtung des Kältemittels abwechselnd umgekehrt wird, und
die gewellte Rippe (6) zumindest zwischen den Flachrohren (5) angeordnet ist, die eine Rohrgruppe stromaufwärts der Verdampfung bilden, in der das Kältemittel im Heizbetrieb von der Mehrzahl von Rohrgruppen zuerst strömt.

9. Außenwärmetauscher (13) nach Anspruch 1, wobei ein Teil des Luftschlitzes, der an den vorderste Luftschlitz (7 a) angrenzt, an einer Position eines hinteren Endes des Verlängerungsabschnitts (60) in der ersten Richtung angeordnet ist.

10. Außenwärmetauscher (13) nach Anspruch 1, wobei die Mehrzahl von Luftschlitzen (7) in der zweiten Richtung die gleiche Länge aufweisen.

11. Außenwärmetauscher (13) nach Anspruch 1, wobei der Verlängerungsabschnitt (60) in der ersten Richtung eine Länge von 1,5 mm oder mehr und 3,5 mm oder weniger aufweist.

12. Fahrzeugklimaanlage (10), Folgendes umfassend:
einen Kältekreislauf (2), Folgendes umfassend: einen Kompressor (11), der ein Kältemittel verdichtet; einen Innenwärmetauscher (15), der Wärme zwischen dem Kältemittel und Luft, die in ein Fahrzeuginneres zuzuführen ist, austauscht; einen Expansionsmechanismus (14), der das Kältemittel expandiert; und den Außenwärmetauscher (13) gemäß Anspruch 1; und
eine Schalteinrichtung (12), die beim Umschalten zwischen dem Heizbetrieb und dem Kühlbetrieb eine Strömungsrichtung des in dem Kältekreislauf strömenden Kältemittels umschaltet.

## Revendications

1. Échangeur de chaleur d'extérieur (13) qui est utilisé dans un climatiseur de véhicule de type pompe à chaleur (10) commutable entre une opération de refroidissement et une opération de chauffage et qui échange la chaleur entre un réfrigérant et air extérieur, l'échangeur de chaleur d'air d'extérieur comprenant :
des tubes plats (5) dans lesquels le réfrigérant s'écoule, les tubes plats (5) ayant une forme en coupe transversale s'étendant dans une première direction, les tubes plats (5) étant agencés dans une deuxième direction orthogonale à la première direction de façon à se faire face, dans lequel l'air extérieur est amené à s'écouler entre les tubes plats (5) d'un côté à l'autre dans la première direction ; et
une ailette ondulée (6) disposée entre les tubes plats (5) adjacents l'un à l'autre, l'ailette ondulée (6) comprenant : une pluralité de portions de plaque (6A) agencées dans une troisième direction orthogonale à la première direction et à la deuxième direction ; et une pluralité de portions pliées (6B) jointes en alternance aux tubes plats (5) adjacente l'un à l'autre,
dans lequel
chacune de la pluralité de portions de plaque (6A) a une pluralité de persiennes (7) formées par coupe et soulèvement, la pluralité de persiennes (7) étant inclinées par rapport à la première direction et étant sensiblement continues l'une avec l'autre dans la première direction,
chacune de la pluralité de portions de plaque (6A) a une portion d'extension (60) faisant saillie vers le vent dans la première direction depuis une région de jonction où la pluralité de portions pliées sont reliées aux tubes plats,
une persienne la plus en avant (7a) qui est située sur le côté le plus vers le vent parmi la pluralité de persiennes (7) est disposée entièrement à l'intérieur de la portion d'extension (60),
chacune de la pluralité de portions de plaque (6A) a une portion plate avant (61) en tant que partie de la portion d'extension, la portion plate avant (61) étant située vers le vent de la persienne la plus en avant (7a),
**caractérisé en ce que**
la portion plate avant (61) a une superficie plus grande que la moitié de celle de la portion d'extension (60), et
toute la persienne la plus en avant (7a) est disposée sous le vent d'un centre de la portion d'extension (60) dans la première direction.

2. Échangeur de chaleur d'extérieur (13) selon la revendication 1, dans lequel la persienne la plus en avant (7a) est continue avec la portion plate avant (61) de façon à former une ligne de crête entre la portion plate avant (61) et la persienne la plus en avant (7a), et est une persienne à une saillie qui fait saillie de la portion plate sur seulement un côté dans la troisième direction.

3. Échangeur de chaleur d'extérieur (13) selon la revendication 1, dans lequel la pluralité de persiennes (7) sont inclinées à un angle de 15 degrés ou plus et de 25 degrés ou moins.

4. Échangeur de chaleur d'extérieur (13) selon la revendication 1, dans lequel chacune de la pluralité de portions pliées est formée en une forme ayant une portion centrale plate de façon à être en contact de surface avec le tube plat.

5. Échangeur de chaleur d'extérieur (13) selon la revendication 1, dans lequel
chacune de la pluralité de portions plates (6A) a une portion plate arrière située sous le vent d'une persienne la plus en arrière qui est située sur le côté le plus sous le vent parmi la pluralité de persiennes, et
la portion plate arrière a une longueur supérieure à celle de la portion plate avant (61) dans la première direction.

6. Échangeur de chaleur d'extérieur (13) selon la revendication 1, dans lequel
la pluralité de persiennes (7) forment un groupe de persiennes vers le vent constitué de persiennes parallèles comprenant la persienne la plus en avant (7a), et un groupe de persiennes sous le vent constitué de persiennes inclinées dans une direction opposée à la l'inclinaison de la persienne la plus en avant (7a) par rapport à la première direction, et
le groupe de persiennes vers le vent et le groupe de persiennes sous le vent sont axisymétriques lorsqu'il son vus dans la deuxième direction.

7. Échangeur de chaleur d'extérieur (13) selon la revendication 1, comprenant en outre une paire de collecteurs qui s'étendent dans la deuxième direction et à laquelle les deux extrémités des tubes plats (5) sont reliées, dans lequel
la première direction et la deuxième direction sont des directions horizontales, et la troisième direction est une direction verticale.

8. Échangeur de chaleur d'extérieur (13) selon la revendication 7, dans lequel
une ou plusieurs plaques de séparation sont prévues à l'intérieur de chacun de la paire de collecteurs de façon à diviser les tubes plats (5) en une pluralité de groupes de tubes entre lesquels une direction d'écoulement du réfrigérant est inversée en alternance, et
l'ailette ondulée (6) est disposée au moins entre les tubes plats (5) qui constituent un groupe de tubes en amont de l'évaporation dans lequel le réfrigérant s'écoule d'abord dans l'opération de chauffage parmi la pluralité de groupes de tubes.

9. Échangeur de chaleur d'extérieur (13) selon la revendication 1, dans lequel une partie de la persienne qui est adjacente à la persienne la plus en avant (7a) est disposée à une position d'une extrémité arrière de la portion d'extension (60) dans la première direction.

10. Échangeur de chaleur d'extérieur (13) selon la revendication 1, dans lequel la pluralité de persiennes (7) ont la même longueur dans la deuxième direction.

11. Échangeur de chaleur d'extérieur (13) selon la revendication 1, dans lequel la portion d'extension (60) a une longueur de 1,5 mm ou plus et de 3,5 mm ou moins dans la première direction.

12. Climatiseur de véhicule (10) comprenant :
un circuit de refroidissement (2) comprenant : un compresseur (11) qui comprime un réfrigérant ; un échangeur de chaleur d'intérieur (15) qui échange la chaleur entre le réfrigérant et l'air à alimenter à l'intérieur du véhicule ; un mécanisme d'expansion (14) qui dilate le réfrigérant ; et l'échangeur de chaleur d'extérieur (13) selon la revendication 1 ; et
un moyen de commutation (12) qui commute une direction d'écoulement du réfrigérant s'écoulant dans le circuit de réfrigération lors de la commutation entre l'opération de chauffage et l'opération de refroidissement.
